# EUROPEAN PATENT SPECIFICATION

(11) **EP 1 064 568 B1**
(45) Date of publication and mention of the grant of the patent: **23.11.2005**
(21) Application number: 99911518.1
(22) Date of filing: 23.03.1999
(51) Int. Cl.: G06K 7/10, G06K 7/08

(54) **AN INTERROGATOR FOR INTERROGATING AN RFID**
ABFRAGEGERÄT ZUM ABFRAGEN EINES RFID TRANSPONDERS
INTERROGATEUR POUR INTERROGER UN REPONDEUR RFID

(30) Priority: 23.03.1998 AU PP254698
(43) Date of publication of application: 03.01.2001
(73) Proprietor: MAGELLAN TECHNOLOGY PTY. LIMITED, Perth, W.A. 6000 (AU)
(72) Inventor: MURDOCH, Graham, Alexander, Annandale, NSW 2038 (AU); LITTLECHILD, Stuart, Colin, Stanmore, NSW 2048 (AU)
(74) Representative: McLeish, Nicholas Alistair Maxwell
(86) International application number: PCT/AU1999/000202
(87) International publication number: WO 1999/049337

(56) References cited:
- WO-A-89/05530
- WO-A-96/02954
- GB-A- 2 305 826
- US-A- 5 689 239

## Description

### Field of the Invention

The invention relates to the field of radio frequency identification (RFID) and more particularly to an interrogator for interrogating an RFID transponder.

The invention has been developed primarily for interrogating multiple passive transponders which are attached to objects to be identified by those respective transponders and will be described hereinafter with reference to that application. A typical application is the identification of RFID transponders attached to conveyor fed luggage where the transponder data is used to control the automatic sorting of the luggage. However, the invention is not limited to this particular field of use.

### Background of the Invention

In prior art systems interrogators use antenna coils to generate an oscillating magnetic field which interrogates or excites an RFID transponder. These interrogator antennae have generally been small and only operate over a range of a few centimetres. In applications where greater range is required larger antennae are used. For examples, in circumstances where one or more transponders are attached to items on pallets or on conveyors then antennae larger than one metre are required. Such systems, for the most part, use open frame coils. However, coils of these dimensions emit high levels of stray fields which can contravene occupational health and safety (OH&S) regulations and electromagnetic emission (EM) regulations. In answer to these concerns it is known to enclose the interrogating coils within a tubular metal housing generally constructed from four walls. These walls collectively define both an entrance port and an exit port to allow objects, and the attached RFID transponders, to be moved in and out of the interrogator. The housing is preferentially made of a high conductivity metal such as copper or aluminium. Although poorer conductivity metals have also been used they are less desirable due to their higher losses and the greater wall thickness required to adequately screen the fields. Leakage of the fields out of the entrance and exit ports must also be suppressed and special suppression structures are available.

This form of interrogator is known as a Tunnel Reader Programmer (TRP). An example of a TRP for interrogating transponders on pallets or conveyors which meets all OH&S and EM regulations in Australia is disclosed in US Patent No. 5,258,766 and international application PCT/AU95/00436.

US-A-5 689 239 shows a similar interrogator system and represents the basis for the preambles of claims 1 and 9.

One of the major drawbacks with a metallic housing is that it allows the flow, on its inner surface, of eddy currents induced by the interrogating field. These currents generate their own magnetic fields which subtract from the field generated by the coils and, thereby, reduce the field internal to the interrogator's housing. The closer the metal housing walls are to the coils the larger the surface eddy currents and the greater the reduction in the internal field. Experiments have shown that a TRP with 1 metre by 1 metre ports requires 1.42 metre by 1.42 metre interrogator coils with metallic walls spaced at 1.9 metres. Even so, the internal field is reduced by one half. If the spacing between the coils and the adjacent wall is reduced to 25 mm then the field is reduced to about 20% of its original value. In an attempt to compensate for this reduction in field strength it has been known to proportionally increase the current flowing in the interrogator coils. However, the power required by the coils increases as the square of the current increase. Accordingly, in the example given above where the field is reduced to 20% of its original value, the coil power will have to be increased by a factor of twenty five. Clearly, either the efficiency and/or the effectiveness of the interrogator is severely compromised.

As a large spacing between the coils and the metallic walls is required for effective interrogator operation, the overall dimensions of the TRP are large. For example, a TRP with 1 metre by I metre ports, 1.15 metre by 1.15 metre coils, and walls spaced 25 mm from the coils, has a cross-sectional area of 1.21 square metres. However, a TRP with 1.42 metre by 1.42 metre coils has an overall cross-sectional area of 3.24 square metres or an 168% increase over the first.

A further disadvantage arising from the reciprocal nature of magnetic coupling is that the metallic walls also reduce the strength of the reply signal from the transponder. This reduction will correspond with that suffered by the interrogation field. As the transponder signal is usually very small any further reduction in its strength is undesirable and leads to degradation in the reliability of the data acquired from that transponder.

The metallic walls also divert the interrogating field causing it to change direction as it approaches the surface of a wall. Control of the direction of the field is important if the guaranteed interrogation of transponders in any orientation is required. The metallic walls cause crowding and misalignment of the interrogation fields resulting in field directional nulls and the failure of the interrogation fields to work as required in the corners of the TRP. This failure results in a reduced volume in the housing in which a transponder can be correctly interrogated and reduced reliability when a transponder is poorly orientated.

### Disclosure of the Invention

It is an object of the present invention, at least in the preferred embodiments, to overcome or substantially ameliorate one or more of the deficiencies of the prior art.

According to a first aspect of the invention there is provided an interrogator for interrogating an RFID transponder, the interrogator including:
a housing defining a cavity for receiving the transponder to be interrogated;
an opening in the housing through which the transponder is progressed into the cavity;
a coil disposed within the housing for generating a magnetic interrogating field in the cavity; and
at least one field control means for providing a low reluctance path for the interrogating field at the periphery of the cavity.

Preferably, the field control means provides a low reluctance path for the interrogating field about substantially all of the periphery of the cavity. More preferably, the housing is defined by a plurality of walls and the field control means includes a lining material of high magnetic permeability disposed adjacent at least one of those walls.

Preferably also, the housing includes four longitudinally extending walls arranged in opposed first and second pairs and the interrogating field extends through the cavity substantially parallel to a first pair, wherein the field control means includes a lining material of high magnetic permeability disposed adjacent to each of the walls in the second pair. More preferably, the lining material is segmented.

In a preferred form, the field control means includes a lining material of high magnetic permeability disposed adjacent to each of the walls.

Preferably, the lining material includes a plurality of segments disposed adjacent to the walls, wherein the periphery of a segment on one wall is spaced apart from the periphery of an adjacent segment on an adjacent wall.

Preferably also, the lining material is abutted against the respective adjacent wall.

According to a second aspect of the invention there is provided a method for interrogating an RFID transponder, the method including the steps of:
defining a cavity in a housing for receiving the transponder to be interrogated;
progressing the transponder through an opening in the housing an into the cavity;
generating a magnetic interrogating field in the cavity with a coil disposed within the housing; and
providing a low reluctance path for the interrogating field at the periphery of the cavity with at least one field control means.

It has been found that a TRP constructed in accordance with the preferred embodiments of the invention obviates the problems normally associated with metallic walls. This is achieved by reducing the effects of the eddy currents and allowing control of the direction of the internal interrogation fields so that directional nulls can be prevented and field uniformity improved. Furthermore, the preferred embodiments of the invention obviate the reduction in the strength of the transponder's reply signal caused by the metallic walls.

In the preferred embodiments a high permeability magnetic material, such as ferrite, is used to line the inside surface of the walls of the TRP. While the high permeability material appears to attract the interrogation field into the walls the material actually provides a very low reluctance return magnetic path for the interrogation field. The vast majority of the interrogation field is diverted from the surface of the metallic screen and instead flows through the high permeability material parallel to the screen surface. Consequently, the field's return path has a very low reluctance and, with the reduction in the interrogation field at the surface of the walls, the eddy currents in those walls are greatly reduced. This results in very little or no reduction in the interrogation field due to the presence of the metallic walls and, as such, the walls can be disposed extremely close to the coil array. The spacing between the coils and the screen can be reduced to less than 10% of the value used in prior art TRPs.

Furthermore, in some embodiments, the high permeability material is placed only on selected areas of the inner surface of the walls. The distribution and direction of the interrogation field is controlled accordingly. More particularly, on that portion of the wall surface not lined, the magnetic field is diverted to run tangential to the metal surface of the walls by the eddy currents and can not penetrate more than a few electromagnetic "skin depths" into the wall. Over the lining or ferrite areas the interrogation field is attracted into the ferrite and enters the ferrite normal to the surface. Once internal to the ferrite the field diverts and flows through the low reluctance ferrite which is for the most part tangential to the metal surface. Thus, by the judicious placement of the ferrite lining, the interrogation field is effectively either tangential or normal to the surface of the metal walls.

The employment of high permeability magnetic material as described in the preferred embodiments greatly improves the strength of the magnetic field coupled to any transponder inside the TRP. Due to the reciprocal nature of mutual magnetic coupling the reverse coupling from the transponder to the TRP coils is improved by the same amount. Consequently, the high permeability magnetic lining material also improves the strength of the signal received by the TRP from the transponder.

### Brief Description of the Drawings

Some preferred embodiments of the invention will now be described, by way of example only, with reference to the accompanying drawings in which:
Figure 1 is a perspective view of a prior art TRP in accordance with US 5,258,766 and PCT/AU95/00436;
Figure 2 is a schematic cross sectional view of the TRP in Figure 1 detailing the spacing between the internal coil arrays and the screen walls;
Figures 3(a) to 3(c) are schematic partial cross sectional views respectively illustrating the magnetic field lines of an interrogation field close to the wall of a prior art TRP, a TRP according to one embodiment of the invention with a continuous high permeability lining, and a TRP according to another embodiment of the invention having a segmented high permeability lining;
Figures 4(a) and 4(b) are partial cross sectional views respectively illustrating the magnetic field lines of an interrogation field in a prior art TRP and a TRP according to an embodiment of the invention;
Figure 5 shows in cross section the TRP of Figure 4(b) better illustrating the high permeability material which is placed against the metallic screen;
Figure 6 is a cross sectional view similar to Figure 5 showing an alternative TRP incorporating the invention where the high permeability material is spaced from the surface of the metallic screen; and
Figure 7 is a cross sectional view similar to Figure 5 showing another alternative TRP incorporating the invention where the high permeability screen only partially covers selected areas of the metallic screen to redistribute the field over the surface to improve the field uniformity.

### Preferred Embodiment of the Invention

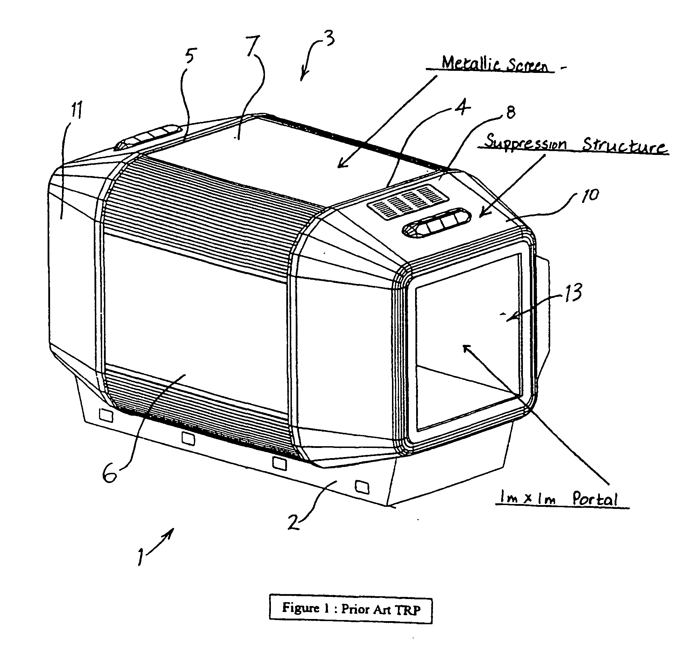

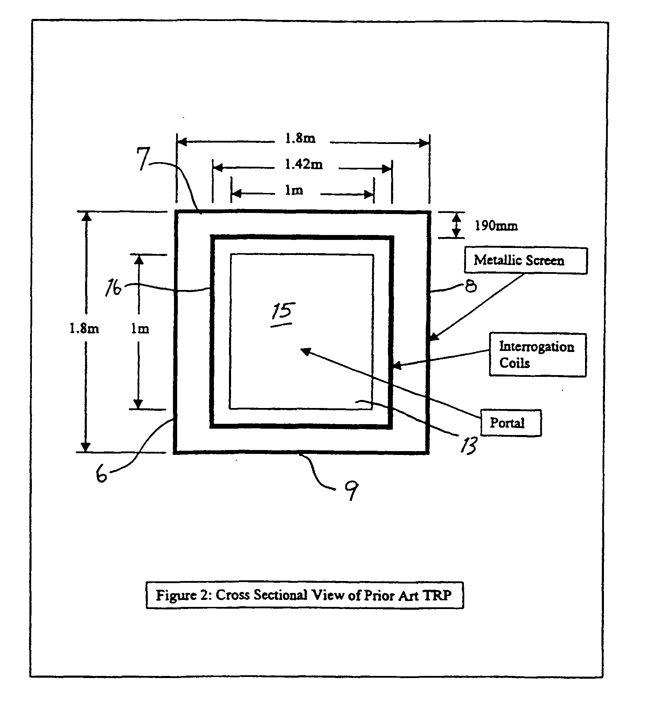

A prior art TRP 1, designed in accordance US 5,258,766 and PCT/AU95/00436, is shown in Figure 1. TRP 1 includes a base 2 and a rectilinear tubular housing 3 extending between a first end 4 and a second end 5. Housing 3 has four metal longitudinal sidewalls 6, 7, 8 and 9 which extend between ends 4 and 5 and which function as magnetic screens for the array of interrogating coils disposed within the housing. TRP 1 also includes two opposed suppression structures 10 and 11 which extend longitudinally from respective ends 4 and 5. Structures 10 and 11 include respective portals 13 through which a transponder (not shown), and an article such as an item of luggage connected to the transponder, can be progressed into or out of housing 3. Housing 3, as best shown in Figure 2, includes an internal cavity 15 in which is disposed an array of interrogating coils 16. As is appreciated by those skilled in the art, walls 6, 7, 8 and 9 are spaced away form the coils 16 to minimise the reduction in the interrogation field strength caused by the eddy currents flowing in the walls.

In the Figure 2 prior art embodiment, TRP 1 includes as spacing of 190 mm between each coil 16 and the respective adjacent wall. Even with this relatively large spacing, the flow of eddy currents in the walls causes a 50% reduction in the internal interrogation field. Coils 16 are 1.42 metre square, this large size being required to maintain the field uniformity and direction within the internal 1 metre cube cavity 15.

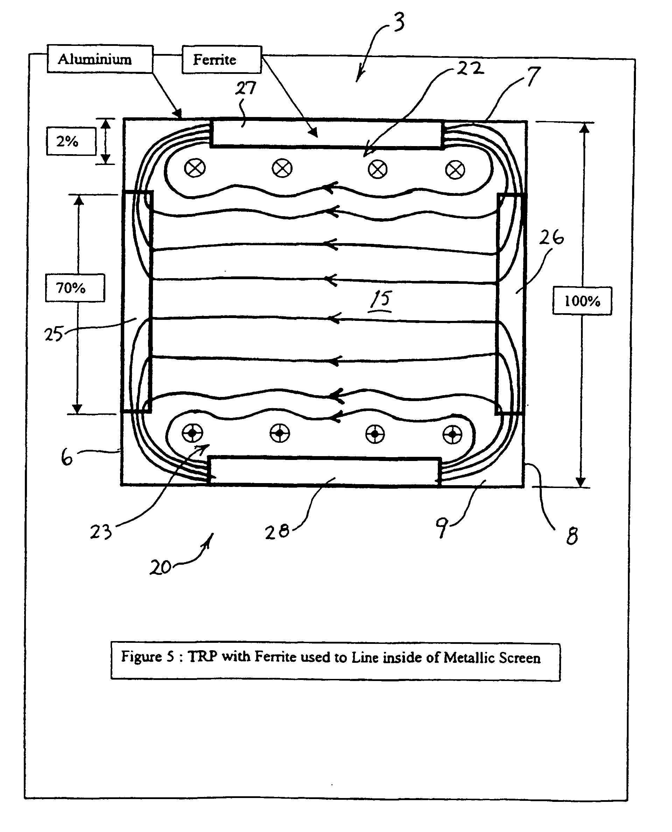

An embodiment of the invention in the form of a TRP 20 is illustrated in Figure 5, where corresponding features are denoted by corresponding reference numerals. In this embodiment the array of interrogating coils 16 includes two sub arrays 22 and 23 which are respectively disposed adjacent to walls 7 and 9. These sub arrays each include one or more coils disposed in a substantially horizontal configuration parallel to the adjacent walls and provide the necessary interrogating field within cavity 15. In other embodiments sub arrays 22 and 23 are respectively disposed in a substantially vertical configuration adjacent to walls 6 and 8.

TRP 20 includes field control means in the form of a lining 25 and 26 of high permeability magnetic material for providing a low reluctance path for the interrogating field at the periphery of the cavity. Linings 25 and 26 are, in this embodiment, produced from ferrite and disposed adjacent to respective walls 6 and 8. In this configuration the vast majority of the interrogation field is diverted from the surface of walls 6 and 8 and instead flows through the high permeability material parallel to those surfaces. With the reduction in the interrogation field at the surface of the walls 6 and 8 due to linings 25 and 26 the eddy currents in those walls are greatly reduced. However, the metallic walls continue to provide their screening properties.

The field control means also includes linings 27 and 28 which are disposed between the respective coils in sub arrays 22 and 23 and adjacent walls 7 and 9. Linings 27 and 28 are also produced from a high permeability magnetic material for providing a low reluctance return path for the interrogating field in the vicinity of walls 7 and 9.

In this embodiment each of linings 25, 26, 27 and 28 do not extend the full length of the adjacent wall. That is, there is a gap between the adjacent ends of adjacent linings. As shown in Figure 5, the linings extend along 70% of the walls and, as such, the gaps are effectively 15%. In other embodiments gaps of a different proportion are used.

For such an arrangement the interrogation coils are spaced from the screen at a distance of 2% of the length of a wall. As TRP 20 includes 1 metre square portals and 1.15m coils, this corresponds to a spacing of 25 mm between the coils and the metallic walls. This compares with 1.42m coils and a 190 mm screen spacing for prior art TRP 1.

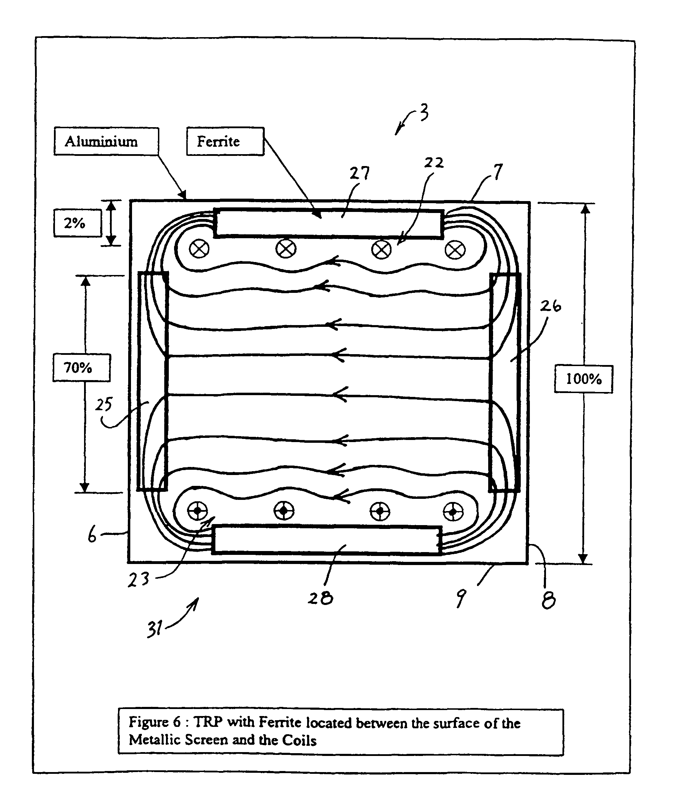

Figure 6 shows in cross section another embodiment of the invention in the form of a TRP 31 in which corresponding features are denoted by corresponding reference numerals. In this embodiment, linings 25, 26, 27 and 28 are of a high permeability material and spaced from respective adjacent walls 6, 7, 8 and 9. The performance of TRP 31 is substantially in line with TRP 20 and is intended to illustrate that the linings can be positioned anywhere in the space between the coils and the screen surface without significantly affecting operation.

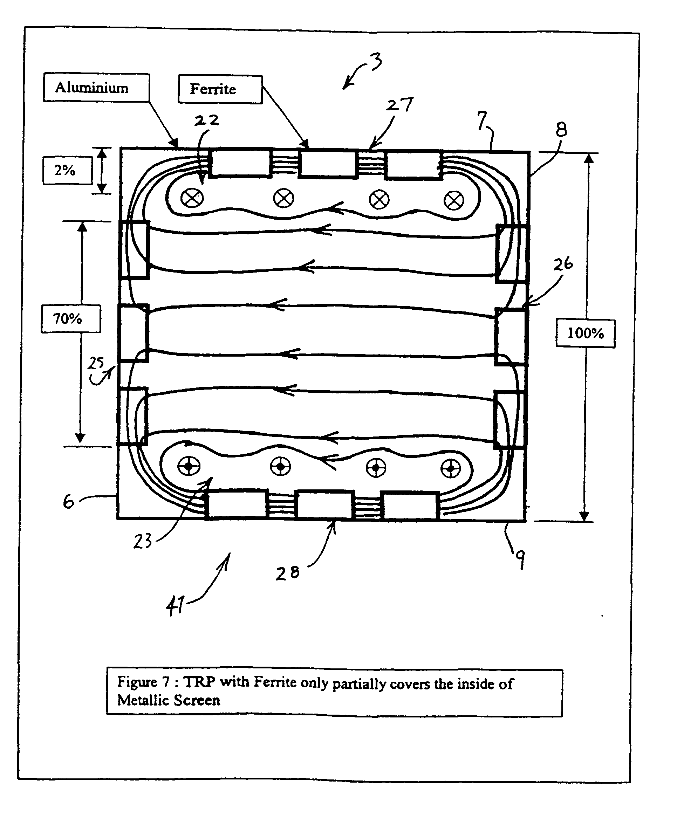

A further embodiment of the invention is illustrated in Figure 7 where, again, corresponding features are denoted by corresponding reference numerals. More particularly, Figure 7 shows in cross section a TRP 41 wherein each lining 25, 26, 27 and 28 are segmented with the result that the high permeability material only partially covers selected areas of the respective adjacent walls. As will now be appreciated by a skilled addressee, this segmentation effects a redistribution of the interrogating field over the screen surface and allows the implementation of optimum field uniformity. That is, by removing the lining from a point where the interrogation field is of a higher intensity will reduce the intensity at that point.

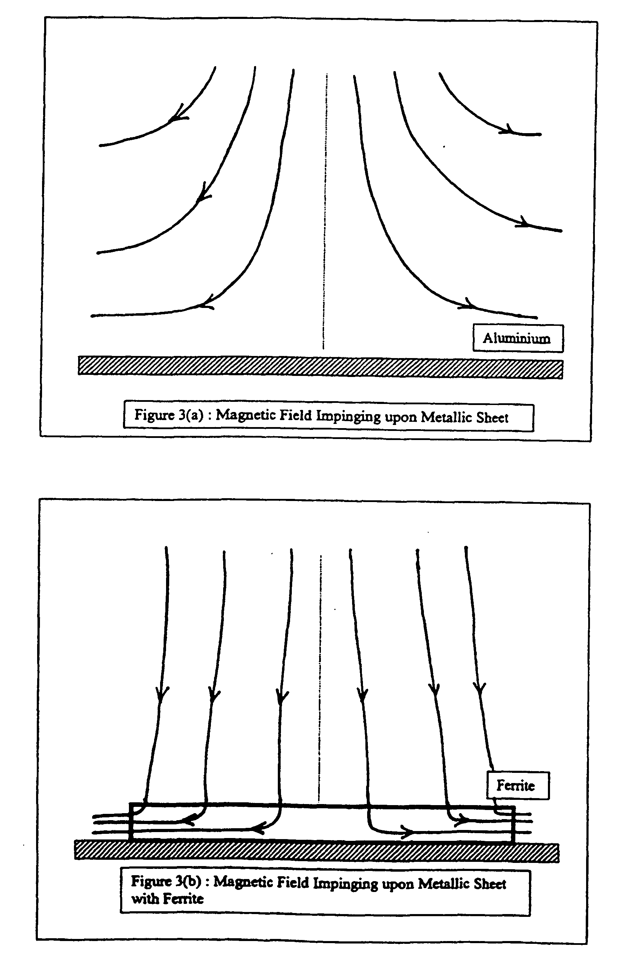

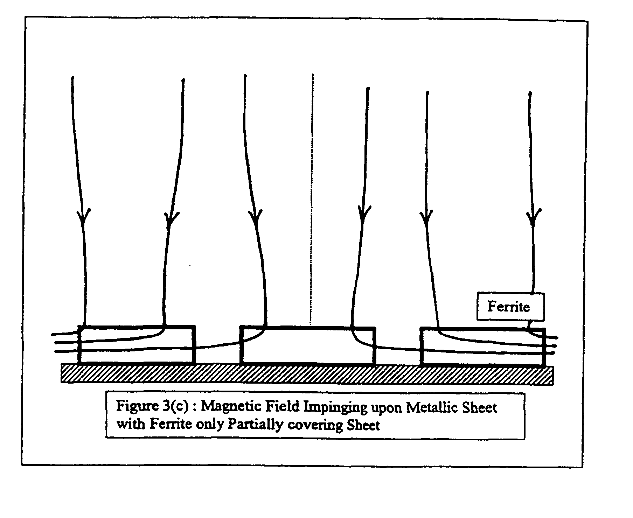

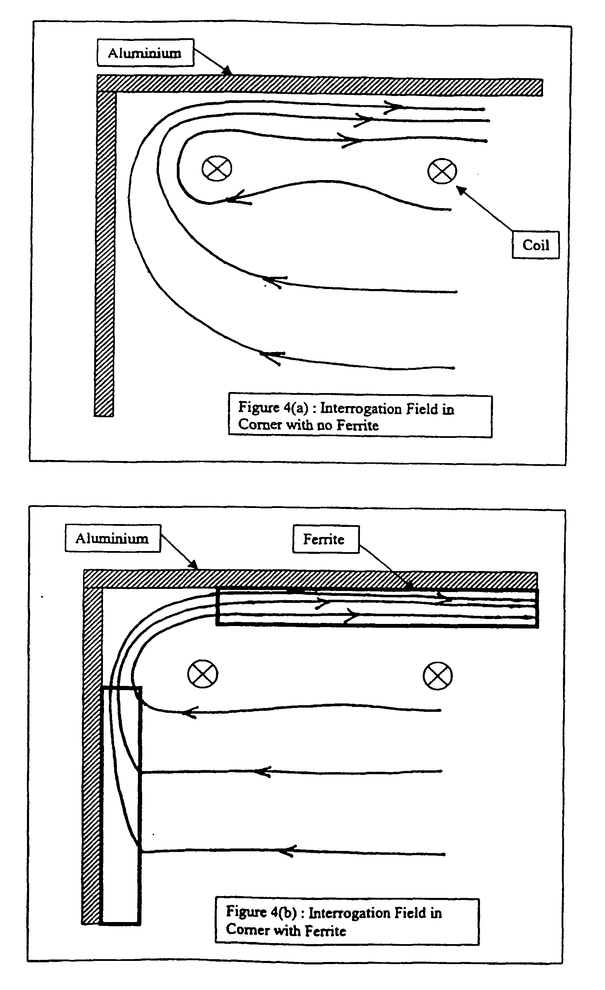

Figures 3 and 4 are provided to further explain the operation of the invention. More particularly, Figure 3(a) shows the behaviour of a magnetic interrogation field impinging upon a high conductivity metallic sheet. The field is diverted by the surface eddy currents and flows tangential to the sheet surface. Figure 3(b) shows the behaviour of the magnetic field when a high permeability material, such as ferrite, covers the metallic sheet. The field is not diverted by the screen and enters the magnetic material essentially at a tangent to the surface. The field is diverted once inside the magnetic material and flows along the low reluctance magnetic path provided by the ferrite. In Figure 3(c) the metallic screen is only partially covered by the high permeability magnetic material. The magnetic field experiences a higher magnetic reluctance at different points and the field intensity is varied at different points accordingly.

Figure 4(a) shows, in cross section, the interrogation field in a corner of the screen with no high permeability material present. The field producing coils are represented in cross section by the crossed circles. Near the field coils in the corners the field direction changes dramatically as the field is diverted by the corner into the return path.

Figure 4(b) shows, in cross section, the interrogation field in a corner of the screen when high permeability material is present. Improved field uniformity is achieved by leaving a gap, as shown, in the corner. This forces the field preferentially into the magnetic material before the field is diverted into the return path. The preferred size of this gap is 15% of the length of a side. If the ratio of the height to width of the TRP changes then the gap size increases or decreases with the gap being a smaller percentage of the length on the shorter side. Consequently, with the improved uniformity the coils can be brought closer to the operating volume and the screen can be brought closer to the coils.

Although the invention has been described with reference to particular examples it will be appreciated by those skilled in the art that it may be embodied in many other forms.

## Claims

1. An interrogator for interrogating an RFID transponder, the interrogator including:
a housing (3) defining cavity (15) for receiving the transponder to be interrogated;
an opening in the housing (3) through which the transponder is progressed into the cavity (15);
a coil (16; 22, 23) disposed within the housing (3) for generating a magnetic interrogating field in the cavity (15) **characterised by**
at least one field control means (25-28) for providing a low reluctance path for the interrogating field at the periphery of the cavity (15).

2. An interrogator according to claim 1 wherein the field control means provides a low reluctance path for the interrogating field about substantially all of the periphery of the cavity.

3. An interrogator according to claim 1 or claim 2 wherein the housing is defined by a plurality of walls and the field control means includes a lining material of high magnetic permeability disposed adjacent at least one of those walls.

4. An interrogator according to claim 3 wherein the housing includes four longitudinally extending walls arranged in opposed first and second pairs and the interrogating field extends through the cavity substantially parallel to a first pair, wherein the field control means includes a lining material of high magnetic permeability disposed adjacent to each of the walls in the second pair.

5. An interrogator according to claim 4 wherein the lining material is segmented.

6. An interrogator according to any one of claims 3 to 5 wherein the field control means includes a lining material of high magnetic permeability disposed adjacent to each of the walls.

7. An interrogator according to any one of claims 3 to 6 wherein the lining material includes a plurality of segments disposed adjacent to the walls, wherein the periphery of a segment on one wall is spaced apart from the periphery of an adjacent segment on an adjacent wall.

8. An interrogator according to any one of claims 3 to 7 wherein the lining material is abutted against the respective adjacent wall.

9. A method for interrogating an RFID transponder, the method including the steps of:
defining a cavity (15) in a housing (3) for receiving the transponder to be interrogated;
progressing the transponder through an opening in the housing (3), an into the cavity (15);
generating a magnetic interrogating field in the cavity (15) with a coil (16; 22, 23) disposed within the housing (3) and **characterised by**
providing a low reluctance path for the interrogating field at the periphery of the cavity (15) with at least one field control means (25-28).

10. A method according to claim 9 including the further step of providing with the field control means a low reluctance path for the interrogating field about substantially all of the periphery of the cavity.

11. A method according to claim 9 or claim 10 wherein the housing is defined by a plurality of walls and the method includes the further step of disposing a lining material of high magnetic permeability adjacent at least one of those walls to define the field control means.

12. A method according to claim 11 wherein the housing includes four longitudinally extending walls arranged in opposed first and second pairs and the interrogating field extends through the cavity substantially parallel to a first pair, the method including the further step of disposing a lining material of high magnetic permeability adjacent to each of the walls in the second pair to define the field control means.

13. A method according to claim 11 including the further step of segmenting the lining material.

14. A method according to any one of claims 11 to 13 including the further step of disposing a lining material of high magnetic permeability adjacent to each of the walls to define the field control means.

15. A method according to any one of claims 11 to 14 wherein the lining material includes a plurality of segments disposed adjacent to the walls and the method includes the further step spacing the periphery of a segment on one wall apart from the periphery of an adjacent segment on an adjacent wall.

16. A method according to any one of claims 11 to 15 including the step of abutting the lining material against the respective adjacent wall.

## Patentansprüche

1. Abfragegerät zum Abfragen eines RFID-Transponders, wobei das Abfragegerät umfasst:
ein Gehäuse (3), welches einen Hohlraum (15) zum Aufnehmen des abzufragenden Transponders definiert;
eine Öffnung in dem Gehäuse (3), durch welche der Transponder in den Hohlraum (15) vorwärts bewegt wird;
eine in dem Gehäuse (3) zum Erzeugen eines magnetischen Abfragefeldes in dem Hohlraum (15) angeordnete Spule (16; 22, 23), **gekennzeichnet durch**
wenigstens ein Feldsteuerungsmittel (25-28) zum Vorsehen eines Niederreluktanzwegs für das Abfragefeld an der Peripherie des Hohlraums (15).

2. Abfragegerät nach Anspruch 1, wobei das Feldsteuerungsmittel im Wesentlichen am gesamten Umfang des Hohlraums einen Niederreluktanzweg für das Abfragefeld vorsieht.

3. Abfragegerät nach Anspruch 1 oder Anspruch 2, wobei das Gehäuse durch eine Vielzahl von Wänden begrenzt ist und das Feldsteuerungsmittel ein Verkleidungsmaterial mit hoher magnetischer Permeabilität umfasst, welches benachbart zu wenigstens einer dieser Wände angeordnet ist.

4. Abfragegerät nach Anspruch 3, wobei das Gehäuse vier in Längsrichtung verlaufende Wände umfasst, welche in gegenüberliegenden ersten und zweiten Paaren angeordnet sind, und wobei sich das Abfragefeld im Wesentlichen parallel zu einem ersten Paar durch den Hohlraum erstreckt, wobei das Feldsteuerungsmittel ein Verkleidungsmaterial mit hoher magnetischer Permeabilität umfasst, welches benachbart zu jeder der Wände im zweiten Paar angeordnet ist.

5. Abfragegerät nach Anspruch 4, wobei das Verkleidungsmaterial segmentiert ist.

6. Abfragegerät nach einem der Ansprüche 3 bis 5, wobei das Feldsteuerungsmittel ein Verkleidungsmaterial mit hoher magnetischer Permeabilität umfasst, welches benachbart zu jeder der Wände angeordnet ist.

7. Abfragegerät nach einem der Ansprüche 3 bis 6, wobei das Verkleidungsmaterial eine Vielzahl von Segmenten umfasst, welche benachbart zu den Wänden angeordnet sind, wobei der Umfang eines Segments an einer Wand in Abstand zum Umfang eines benachbarten Segments an einer benachbarten Wand angeordnet ist.

8. Abfragegerät nach einem der Ansprüche 3 bis 7, wobei das Verkleidungsmaterial an der entsprechenden benachbarten Wand anliegt.

9. Verfahren zum Abfragen eines RFID-Transponders, wobei das Verfahren die folgenden Schritte umfasst:
Definieren eines Hohlraums (15) in einem Gehäuse (3) zum Aufnehmen des abzufragenden Transponders;
Vorwärtsbewegen des Transponders durch eine Öffnung in dem Gehäuse (3) und in den Hohlraum (15);
Erzeugen eines magnetischen Abfragefeldes in dem Hohlraum (15), wobei eine Spule (16; 22, 23) in dem Gehäuse (3) angeordnet ist, und
**gekennzeichnet durch**
das Vorsehen eines Niederreluktanzwegs für das Abfragefeld am Umfang des Hohlraums (15) mit wenigstens einem Feldsteuerungsmittel (25-28).

10. Verfahren nach Anspruch 9, welches den weiteren Schritt des Vorsehens eines Niederreluktanzwegs mit dem Feldsteuerungsmittel für das Abfragefeld an im Wesentlichen dem gesamten Umfang des Hohlraums umfasst.

11. Verfahren nach Anspruch 9 oder Anspruch 10, wobei das Gehäuse durch eine Vielzahl von Wänden definiert ist und das Verfahren den weiteren Schritt des Anordnens eines Verkleidungsmaterials mit hoher magnetischer Permeabilität benachbart zu wenigstens einer dieser Wände zum Begrenzen des Feldsteuerungsmittels vorsieht.

12. Verfahren nach Anspruch 11, wobei das Gehäuse vier in Längsrichtung verlaufende Wände umfasst, welche in gegenüberliegenden ersten und zweiten Paaren angeordnet sind, und wobei sich das Abfragefeld im Wesentlichen parallel zu einem ersten Paar durch den Hohlraum erstreckt, wobei das Verfahren den weiteren Schritt des Anordnens eines Verkleidungsmaterials mit hoher magnetischer Permeabilität benachbart zu jeder der Wände im zweiten Paar zum Definieren des Feldsteuerungsmittels umfasst.

13. Verfahren nach Anspruch 11, welches den weiteren Schritt des Segmentierens des Verkleidungsmaterials umfasst.

14. Verfahren nach einem der Ansprüche 11 bis 13, welches den weiteren Schritt des Anordnens eines Verkleidungsmaterials mit hoher magnetischer Permeabilität benachbart zu jeder der Wände zum Definieren des Feldsteuerungsmittels vorsieht.

15. Verfahren nach einem der Ansprüche 11 bis 14, wobei das Verkleidungsmaterial eine Vielzahl von Segmenten umfasst, welche benachbart zu den Wänden angeordnet sind, und wobei das Verfahren den weiteren Schritt des Anordnens des Umfangs eines Segments an einer Wand in Abstand zum Umfang eines benachbarten Segments an einer benachbarten Wand umfasst.

16. Verfahren nach einem der Ansprüche 11 bis 15, welches den Schritt des Anlegens des Verkleidungsmaterials an der entsprechenden benachbarten Wand umfasst.

## Revendications

1. Interrogateur pour interroger un répéteur RFID (Identification Radio Fréquence), l'interrogateur comportant :
un boîtier (3) définissant une cavité (15) pour recevoir le répéteur devant être interrogé ;
une ouverture pratiquée dans le boîtier (3), à travers laquelle on fait avancer le répondeur dans la cavité (15) ;
une bobine (16 ; 22, 23) disposée à l'intérieur du boîtier (3) pour générer un champ magnétique d'interrogation dans la cavité (15) ; **caractérisé par** :
au moins un moyen de commande de champ (25-28) pour produire un trajet de faible réluctance pour le champ d'interrogation à la périphérie de la cavité (15).

2. Interrogateur selon la revendication 1, dans lequel le moyen de commande de champ fournit un trajet de faible réluctance pour le champ d'interrogation sur pratiquement la totalité de la périphérie de la cavité.

3. Interrogateur selon la revendication 1 ou 2, dans lequel le boîtier est défini par une pluralité de parois et le moyen de commande de champ comporte un matériau de garniture ayant une perméabilité magnétique élevée, disposé de façon adjacente à au moins l'une de ces parois.

4. Interrogateur selon la revendication 3, dans lequel le boîtier comporte quatre parois s'étendant longitudinalement et disposées dans des première et seconde paires opposées, et dans lequel le champ d'interrogation s'étend à travers la cavité sensiblement parallèlement à une première paire, le moyen de commande de champ comportant un matériau de garniture ayant une perméabilité magnétique élevée, disposé de façon adjacente à chacune des parois de la seconde paire.

5. Interrogateur selon la revendication 4, dans lequel le matériau de garniture est segmenté.

6. Interrogateur selon l'une quelconque des revendications 3 à 5, dans lequel le moyen de commande de champ comporte un matériau de garniture ayant une perméabilité magnétique élevée, disposé de façon adjacente à chacune des parois.

7. Interrogateur selon l'une quelconque des revendications 3 à 6, dans lequel le matériau de garniture comporte une pluralité de segments disposés de façon adjacente aux parois, la périphérie d'un segment sur une paroi étant espacée de la périphérie d'un segment adjacent sur une paroi adjacente.

8. Interrogateur selon l'une quelconque des revendications 3 à 7, dans lequel le matériau de garniture est mis en butée contre la paroi adjacente respective.

9. Procédé pour interroger un répéteur RFID, le procédé comportant les étapes consistant à :
définir une cavité (15) dans un boîtier (3) pour recevoir le répéteur devant être interrogé ;
faire avancer le répéteur à travers une ouverture pratiquée dans le boîtier (3), et l'introduire dans la cavité (15) ;
générer un champ magnétique d'interrogation dans la cavité (15) avec une bobine (16 ; 22, 23) disposée à l'intérieur du boîtier (3) ; et **caractérisé par** le fait de :
produire un trajet de faible réluctance pour le champ d'interrogation à la périphérie de la cavité (15) avec au moins un moyen de commande de champ (25-28).

10. Procédé selon la revendication 9, comportant l'étape supplémentaire consistant à produire pour le moyen de commande de champ un trajet de faible réluctance pour le champ d'interrogation sur pratiquement la totalité de la périphérie de la cavité.

11. Procédé selon la revendication 9 ou 10, dans lequel le boîtier est défini par une pluralité de parois, et dans lequel le procédé comporte l'étape supplémentaire consistant à disposer un matériau de garniture ayant une perméabilité magnétique élevée, de façon adjacente à au moins l'une de ces parois afin de définir le moyen de commande de champ.

12. Procédé selon la revendication 11, dans lequel le boîtier comporte quatre parois s'étendant longitudinalement, disposées dans des première et seconde paires opposées et le champ d'interrogation s'étend à travers la cavité sensiblement parallèlement à une première paire, le procédé comportant l'étape supplémentaire consistant à disposer un matériau de garniture ayant une perméabilité magnétique élevée de façon adjacente à chacune des parois de la seconde paire pour définir le moyen de commande de champ.

13. Procédé selon la revendication 11, comportant l'étape supplémentaire consistant à segmenter le matériau de garniture.

14. Procédé selon l'une quelconque des revendications 11 à 13, comportant l'étape supplémentaire consistant à disposer un matériau de garniture ayant une perméabilité magnétique élevée de façon adjacente à chacune des parois afin de définir le moyen de commande de champ.

15. Procédé selon l'une quelconque des revendications 11 à 14, dans lequel le matériau de garniture comporte une pluralité de segments disposés de façon adjacente aux parois, et dans lequel le procédé comporte l'étape supplémentaire consistant à espacer la périphérie d'un segment sur une paroi de la périphérie d'un segment adjacent sur une paroi adjacente.

16. Procédé selon l'une quelconque des revendications 11 à 15, comportant l'étape consistant à mettre en butée le matériau de garniture contre la paroi adjacente respective.
